# FASCICULE DE BREVET EUROPEEN

(11) **EP 3 256 626 B1**
(45) Date de publication et mention de la délivrance du brevet: **09.01.2019**
(21) Numéro de dépôt: 16707895.5
(22) Date de dépôt: 10.02.2016
(51) Int. Cl.: D03D 49/00, F01D 25/00, F01D 25/24, F02K 1/64, D03D 3/06, D03D 25/00

(54) **PROCÉDÉ DE FABRICATION D'UNE PRÉFORME DE FIBRES DE RENFORT TISSÉE COMPRENANT UNE SECTION ÉVOLUTIVE**
VERFAHREN ZUR HERSTELLUNG EINER VORFORM AUS GEWEBTEN ARMIERUNGSFASERN MIT VERÄNDERLICHEM QUERSCHNITT
METHOD FOR MANUFACTURING A PREFORM MADE OF WOVEN REINFORCEMENT FIBERS HAVING A VARIABLE CROSS-SECTION

(30) Priorité: 10.02.2015 FR 1551072
(43) Date de publication de la demande: 20.12.2017
(73) Titulaire: Safran Nacelles, 76700 Gonfreville-l'Orcher (FR)
(72) Inventeur: PROVOST, Benjamin, 76290 Montivilliers (FR); DESJOYEAUX, Bertrand, 76310 Sainte Adresse (FR); LOUCHARD, Sébastien, 76600 Le Havre (FR); MARICAL, Arnaud, 27680 Quilleboeuf sur Seine (FR)
(74) Mandataire: Gaillarde, Frédéric F. Ch.
(86) Numéro de dépôt international: PCT/FR2016/050304
(87) Numéro de publication internationale: WO 2016/128678

(56) Documents cités:
- WO-A1-2010/061140
- WO-A2-2013/088039
- WO-A2-2013/104852
- FR-A1- 2 453 230
- US-A1- 2011 076 431

## Description

La présente invention concerne un procédé de fabrication d'une préforme sèche tissée destinée à être infiltrée de résine pour former des matériaux composites, ainsi qu'un profilé en matériaux composites comprenant une préforme réalisée suivant un tel procédé.

Pour réaliser des éléments de structure résistants et légers, en particulier dans le domaine aéronautique, il est connu de préparer une préforme textile à partir de fibres sèches, notamment des fibres de carbone, qui est ensuite imprégnée d'une résine dans un outillage, suivant un procédé appelé « LCM » (Liquid Composit Molding).

La résine fluide réalise ici une imprégnation complète de la préforme, et l'outillage permet une mise en forme de cet ensemble. Après cuisson pour polymériser la résine, on obtient un élément comprenant des fibres dont la densité et l'orientation sont ajustées afin d'obtenir des caractéristiques de résistance mécanique élevées, adaptées aux efforts appliqués sur cette pièce.

On peut réaliser en particulier des pièces comportant une forme allongée suivant une direction longitudinale, présentant une section transversale variable évolutive.

Par exemple un cadre arrière de grille d'inverseur de poussée d'un turboréacteur constitue une pièce allongée comprenant une section plate constante formant sensiblement une ceinture, présentant à chaque extrémité ses deux rebords latéraux repliés de manière à former une chape comportant deux ailes parallèles. Un perçage transversal des ailes reçoit un axe permettant dans la direction longitudinale une traction de serrage sur les extrémités.

Dans le cas d'une pièce allongée présentant une section plate qui dans la longueur change de plan pour venir à 90°, une solution connue consiste à draper à plat des plis de tissu formés en deux dimensions, puis à déformer cet ensemble en le vrillant suivant un quart de tour pour réaliser de manière progressive le changement de plan.

Toutefois pour cette solution la découpe et la manipulation d'une multitude de plis de tissu étroits et élancés peut poser des problèmes de pertes de mèches en bord de plis, et de déformations importantes de ces plis. De plus la déformation des plis peut entraîner également des désorientations locales des fibres, qui ne sont pas contrôlables si elles sont à l'intérieur de la pièce.

Par ailleurs les dimensions d'une telle pièce avec des côtés finis en sorti de moulage sont difficiles à obtenir, et il faut dans la plupart des cas procéder à un usinage après la polymérisation, qui est onéreux.

Une autre solution pour réaliser un changement de section consiste à fabriquer une préforme multicouches de type ruban, puis à augmenter de façon locale et progressive le nombre de couches par un ajout successif de fils de chaîne et de trame.

On obtient ainsi une préforme unique comportant un épaississement local où des fils de chaîne sont ajoutés successivement. Cependant l'absence de continuité de ces fils ajoutés réduit fortement la tenue mécanique de l'ensemble, dans les zones de variation du nombre de fils.

Un procédé de fabrication d'une préforme de fibres de renfort selon le préambule de la revendication 1 est connu de WO 2010/061140 A1.

La présente invention a notamment pour but d'éviter ces inconvénients de la technique antérieure.

Elle propose à cet effet un procédé de fabrication d'une préforme fibreuse tissée suivant une direction longitudinale, prévue pour être imprégnée de résine afin de former un élément longiligne présentant une section transversale évolutive, comprenant simultanément une réduction (ou inversement une augmentation) de la largeur et une augmentation (ou inversement une réduction) de la hauteur, cette section évolutive comportant sur la longueur des fils de chaîne en nombre constant qui sont continus, disposés en hauteur suivant des couches, remarquable en ce que pour une réduction de la largeur il effectue un changement d'armure introduisant des fils de trame additionnels qui augmentent ainsi le nombre de couches, et simultanément il resserre les dents du peigne de tassement longitudinal pour réduire l'espace entre les colonne de fils de chaine, et inversement pour une augmentation de la largeur il réduit le nombre de fils de trame qui diminue le nombre de couches et simultanément il écarte les dents du peigne.

Un avantage de ce procédé de tissage est que l'on obtient en une seule opération, une préforme contenant une zone de variation progressive entièrement finie, comprenant des fils de chaîne continus sur toute la longueur de cette variation. Cette préforme permet un temps de main-d'oeuvre réduit lors de sa mise en oeuvre, ainsi qu'une résistance mécanique élevée dans la direction longitudinale.

La préforme tissée selon l'invention peut comporter de plus une ou plusieurs des caractéristiques suivantes, qui peuvent être combinées entre elles.

En particulier, le procédé de fabrication peut à partir d'un renfort présentant un nombre défini de couches de fils de chaîne superposées, changer le motif de tissage en insérant ainsi un nombre double de fils de trame, et réaliser ensuite un resserrement des dents du peigne pour obtenir un nombre double de couches superposées présentant une largeur réduite sensiblement de moitié.

Avantageusement, chaque fils de trame prend sur chaque couche de fils de chaîne un fil sur quatre qu'il laisse de l'autre côté, les fils pris sur chaque couche étant superposés entre les différentes couches.

Le procédé peut prendre en particulier entre deux dents du peigne seize fils de chaîne.

A partir d'un tissage d'une préforme plate amont comprenant une largeur et une hauteur initiales, le procédé peut réaliser une section évolutive présentant en aval une largeur et une hauteur finale sensiblement égales respectivement à la hauteur et à la largeur initiale. On obtient un profilé présentant une rotation de sa section sur 90°.

Avantageusement pour certaines applications, comprenant par exemple un perçage final, le procédé comporte une étape suivante de dépose de fibres de renfort sur des faces planes d'une section plate se trouvant à proximité de la section évolutive. On peut renforcer notamment le contour d'un perçage.

En particulier les fibres de renfort prévues pour renforcer un perçage de la section plate, peuvent présenter deux orientations croisées sensiblement à +/-45° par rapport aux fils de chaîne, ou une orientation concentrique par rapport à ce perçage.

Le procédé peut comporter aussi pendant le tissage une opération de déliage d'une partie de la section constante à proximité de la section évolutive, réalisant une coupe médiane pour former une fourche. On réalise ainsi facilement une chape comprenant une grande résistance mécanique.

L'invention a aussi pour objet un profilé en matériaux composites formé à partir d'une préforme recevant une résine injectée, qui est réalisé avec un procédé comprenant l'une quelconque des caractéristiques précédentes.

En particulier le profilé peut constituer un élément de structure intégré dans une nacelle de turboréacteur et présentant une section évolutive.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente un cadre arrière de turboréacteur, comprenant deux extrémités comportant une section évolutive réalisée avec un procédé suivant l'invention ;
- la figure 2 est un dessin d'une section évolutive réalisée avec un procédé suivant l'invention ;
- la figure 3 est un schéma présentant en coupe transversale successivement les différentes étapes de tissage de la partie plate horizontale en amont de la section évolutive ;
- les figures 4A et 4B sont des schémas présentant successivement les différentes étapes de tissage de la première partie de la section évolutive ;
- la figure 5 est un schéma présentant successivement les différentes étapes de tissage de la deuxième partie de la section évolutive ;
- les figures 6 et 7 présentent deux types de renfort sur une section plate comprenant un perçage ;
- la figure 8 présente la réalisation d'une fourche ; et
- la figure 9 présente la réalisation de deux sections évolutives inversées successives.

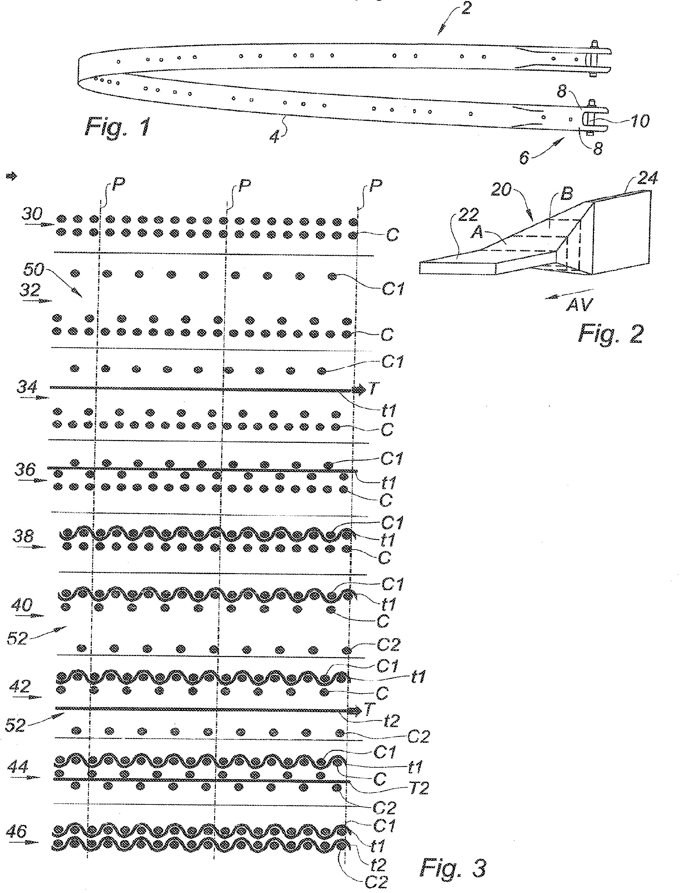

La figure 1 présente un cadre arrière de grille d'inverseur de poussée 2 pour une nacelle de turboréacteur. Dans un turboréacteur à double flux, une veine périphérique circulaire entoure le réacteur pour conduire de l'air froid de propulsion. Dans un mode de freinage de l'aéronef, cette veine est fermée par des volets pour dévier le flux radialement vers l'extérieur, en passant par des grilles d'inverseur qui le dirige vers l'avant en générant une force de freinage.

Le cadre arrière 2 est une ceinture fixe réalisée en matériaux composites, disposée à l'arrière des grilles d'inverseur, comportant une section longitudinale constante plate 4 se terminant à chaque extrémité 6 par deux rebords latéraux 8 pliés à 90°, formant une chape comprenant un perçage recevant un axe transversal de fixation 10.

Pour sa fixation on applique une tension élevée sur le cadre arrière en exerçant une traction sur l'axe transversal 10, qui doit être transmise par les rebords latéraux 8 à la section plate 4, sans risque de rupture. En particulier il faut réaliser une section évolutive pour passer progressivement de la section plate 4 à la section d'extrémité comprenant les rebords 8, comportant une résistance à la traction importante.

La figure 2 présente une préforme tissée avec une avance des fils de chaîne suivant la direction longitudinale indiquée par la flèche notée « AV », comprenant une partie amont plate horizontale 22, suivie d'une section évolutive 20 qui progressivement réduit la largeur et simultanément augmente la hauteur, pour atteindre une partie aval plate verticale 24 présentant la section de la partie amont tournée de 90°.

La section évolutive 20 comporte une première partie A commençant juste après la partie amont horizontale 22, qui représente environ le premier tiers de la longueur de cette section, et une deuxième partie B qui représente environ le deuxième tiers cette longueur.

La figure 3 présente de façon schématique les opérations successives de formation de la partie amont plate horizontale 22, comprenant des fils de chaîne continus c, et des fils de trame t insérés successivement dans ces opérations.

La première opération 30 comporte la réalisation de deux couches similaires de fils de chaîne c suivant deux plans, présentant les fils qui sont superposés deux par deux. Les dents d'un peigne de tassage longitudinal des fils de trame t après leurs insertions, alignées suivant les axes P, reçoivent huit fils de chaînes c de chaque couche entre deux dents.

La deuxième opération 32 comporte l'ouverture d'une foule 50 formant le passage transversal prévu pour recevoir un fil de trame, en soulevant un fil de chaîne c1 sur deux de la couche supérieure.

La troisième opération 34 comporte le passage d'un fil de trame t1 dans la foule 50, suivant la direction indiquée par la flèche T.

La quatrième opération 36 comporte la fermeture de la foule 50, en redescendant les fils de chaîne soulevés c1. La cinquième opération 38 présente la fin de la fermeture de la foule 50, l'ensemble des fils de chaîne c, c1 étant disposé à nouveau suivant deux couches.

La sixième opération 40 comporte l'ouverture d'une deuxième foule 52 en abaissant un fil de chaîne c2 sur deux de la couche inférieure, qui est verticalement décalé par rapport au fil de chaîne c1 de la première couche qui avait été élevé.

La septième opération 42 comporte le passage d'un fil de trame t2 dans la deuxième foule 52.

La huitième opération 44 comporte la fermeture de la deuxième foule 52 en remontant les fils de chaîne abaissés c2. La neuvième et dernière opération 46 présente la fin de la fermeture de la deuxième foule 52, l'ensemble du tissu revenant sur les deux plans d'origine.

On a de plus après le passage d'un ou de plusieurs fils de trame t1, t2, une opération de tassage de ces fils dans la direction longitudinale, par les dents du peigne disposées suivant les axes P. Pour cette opération de tissage de la section amont constante 22, l'écartement des dents du peigne reste aussi constant.

D'une manière générale la partie amont 22 présentée dans cet exemple avec deux couches, peut comporter un nombre variable de couches, avec des fils de chaine et trame tissés entre eux selon un motif interlock classique permettant de lier ces couches de fils entre elles selon un motif défini de couches.

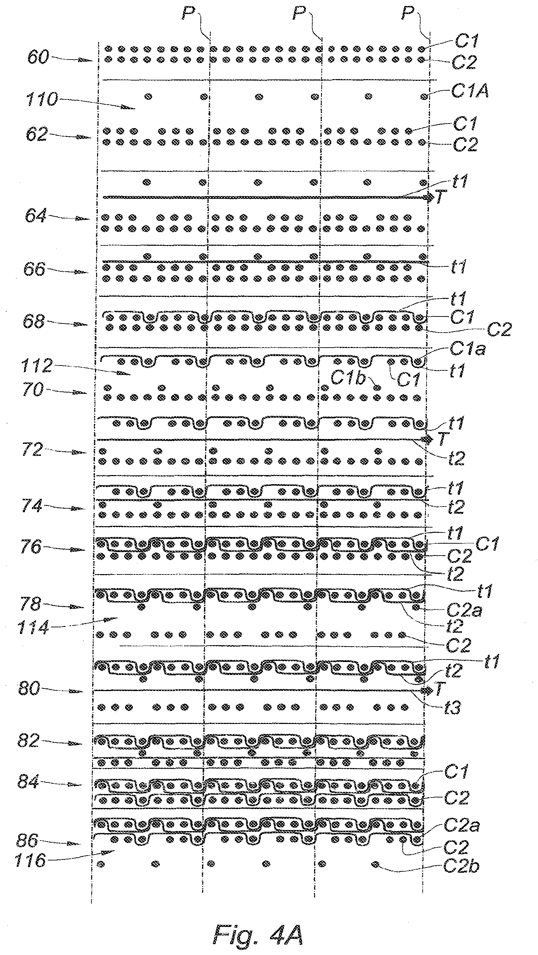

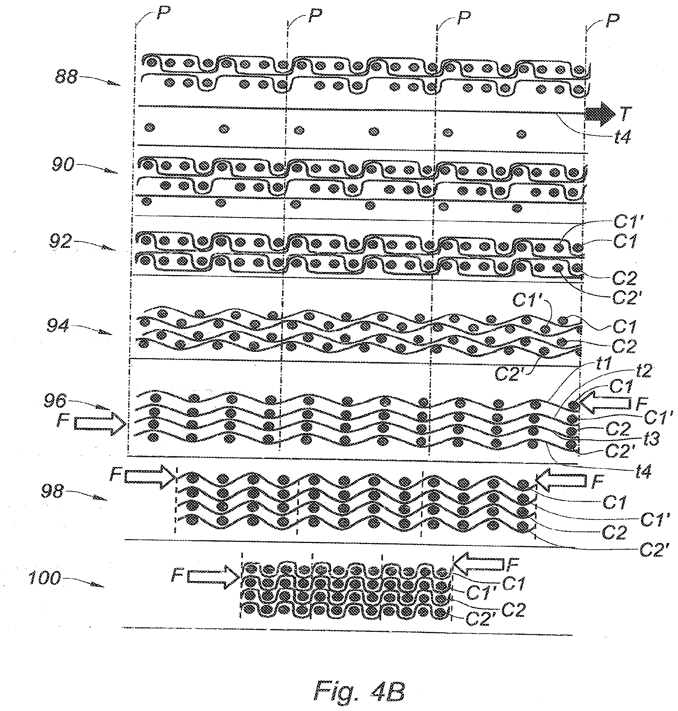

Les figures 4A et 4B présentent vingt-et-une opérations successives de formation de la première partie A de la section évolutive 20, comprenant des fils de chaîne continus c, et des fils de trame t insérés successivement dans ces opérations.

La première opération 60 est la reprise des deux couches identiques de fils de chaîne, c1 pour la couche supérieure et c2 pour la couche inférieure, présentant les fils qui sont superposés deux par deux. Les dents du peigne de tassage des fils de trame t après leurs insertions, alignées suivant les axes P, reçoivent huit fils de chaînes c de chaque couche entre deux dents.

La deuxième opération 62 comporte l'ouverture d'une première foule 110 formant le passage transversal prévu pour recevoir un premier fil de trame t1, en soulevant un fil de chaîne c1a sur quatre de la couche supérieure c1.

La troisième opération 64 comporte le passage du premier fil de trame t1 dans la première foule 110, suivant la direction indiquée par la flèche T.

La quatrième opération 66 comporte la fermeture de la première foule 110, en redescendant les fils de chaîne soulevés c1a. La cinquième opération 68 présente la fin de la fermeture de la première foule 110, l'ensemble des fils de chaîne c1, c2 étant disposé à nouveau suivant deux couches.

La sixième opération 70 comporte l'ouverture d'une deuxième foule 112 en soulevant l'ensemble des fils de chaîne de la couche supérieure c1, hormis un fil c1b sur quatre se trouvant à côté d'un premier fil c1a qui a été soulevé pour l'ouverture de la première foule 110.

Les septième 72, huitième 74 et neuvième 76 opérations comportent successivement comme précédemment, le passage du deuxième fils de trame t2, le début de fermeture de la deuxième foule 112 et la fin de cette fermeture. L'ensemble des fils de chaîne c1, c2 sont à nouveau disposés suivant deux couches.

La dixième opération 78 comporte l'ouverture d'une troisième foule 114 comprenant comme pour l'ouverture de la première foule 110, le soulèvement d'un fil de chaîne c2a sur quatre de la couche inférieure c2, qui est aligné sur le fil de chaîne c1a qui a été soulevé pour cette première foule.

Les onzième 80, douzième 82 et treizième 84 opérations comportent successivement comme précédemment, le passage du troisième fils de trame t3, le début de fermeture de la troisième foule 114 et la fin de cette fermeture. L'ensemble des fils de chaîne c1, c2 est à nouveau disposé suivant deux couches.

La quatorzième opération 86 comporte l'ouverture d'une quatrième foule 116 comprenant comme pour l'ouverture de la deuxième foule 112, le soulèvement de l'ensemble des fils de chaîne de la couche inférieure c2, hormis un fil c2b sur quatre se trouvant à côté d'un premier fil c2a qui a été soulevé pour l'ouverture de la troisième foule 114.

Les quinzième 88, seizième 90 et dix-septième 92 opérations comportent successivement comme précédemment, le passage du quatrième fils de trame t4, le début de fermeture de la quatrième foule 116 et la fin de cette fermeture. L'ensemble des fils de chaîne c1, c2 est à nouveau disposé suivant deux couches.

Pour toutes les opérations précédentes, le tassage longitudinal des fils de trame t est fait avec le peigne conservant le même espacement des dents P.

La dix-huitième opération 94 présente un déplacement latéral des fils de chaîne c1, c1', c2, c2' qui sous la tension des fils de trame t ont naturellement tendance à se déplacer en hauteur alternativement l'un vers le haut et le suivant vers le bas, en fonction de leurs positions au-dessus ou en dessous d'un même fil de trame.

Lorsque du tissage de la première partie A de la section évolutive 20, un changement dans le motif de tissage est effectué qui permet une sélection des fils de chaine différente. Ce changement se traduit entre autre par l'insertion d'un nombre de fils de trame plus important qui par leur liage permettent de former un nombre de couches liées entre elles plus important.

La dix-neuvième opération 96 présente le déplacement latéral des fils de chaînes c1, c1', c2, c2' qui continue de la même manière, avec une tendance naturelle à s'aligner les uns sur les autres pour former entre deux dents du peigne P quatre colonnes. Une réorganisation des fils de chaîne est observée sous la tension des fils de trame t, ceux-ci ont naturellement tendance à se déplacer en hauteur alternativement l'un vers le haut et le suivant vers le bas, en fonction de leurs positions au-dessus ou en dessous d'un même fil de trame.

Du fait du nouveau motif de tissage, liant moins de fils entre eux, les fils de chaine ont une tendance naturelle à s'aligner les uns sur les autres pour former entre deux dents du peigne P une colonne.

La vingtième opération 98 présente un resserrement de l'espacement entre les dents du peigne P, indiqué par les flèches F, qui entraîne un rapprochement des colonnes de fils de chaîne c entre elles.

La vingt-et-unième et dernière opération 100 présente à la fin du rapprochement des dents du peigne P, des écartements entre ces dents qui est diminué sensiblement de moitié. On obtient un renfort tissé de quatre couches de fils de chaîne c comprenant une densité de fils de chaîne en surface similaire à celle du tissu de départ à deux couches, présentée par la neuvième opération 46 de la figure 3, avec une épaisseur qui est doublée.

On a ainsi une première évolution de la section évolutive 20, comprenant une largeur diminuée de moitié et une hauteur doublée.

Il faut prévoir en particulier pour le tissage de ce type de préforme, un métier à tisser automatisé comprenant un peigne évolutif, capable de modifier en cours de fabrication l'écartement de ses dents.

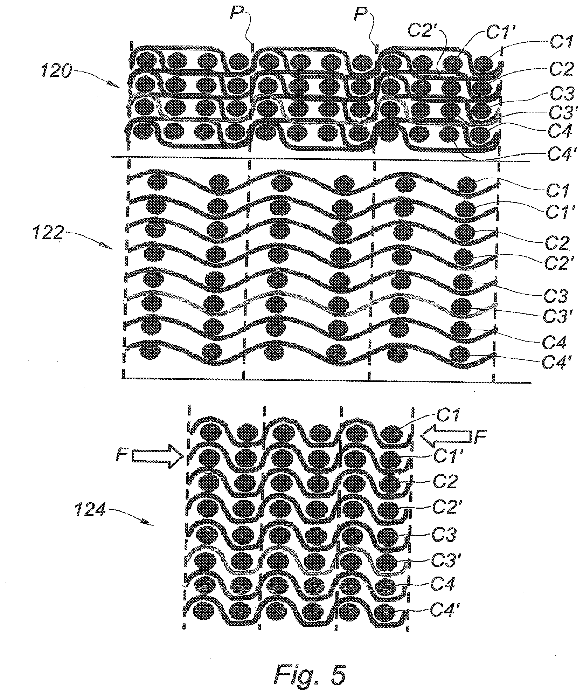

La figure 5 présente de manière résumée trois opérations successives de formation de la deuxième partie B de la section évolutive 20, à partir de quatre couches de fils de chaîne c1, c2, c3, c4 qui sortent de la première partie A.

On réalise toutes les opérations précédentes présentées figure 4A et 4B, avec les quatre couches de fils de chaîne au lieu de deux. On obtient d'abord dans la première étape 120, comme pour la dix-septième opération précédente 92, quatre couches resserrées comprenant huit fils de trame prenant chacun sur chaque couche un fils de chaîne sur quatre, ces fils de chaîne pris des quatre couches étant superposés.

On obtient ensuite dans la deuxième étape 122, comme pour la dix-neuvième opération précédente 96, le déplacement latéral naturel des fils de chaînes c1, c1', c2, c2', c3, c3', c4, c4' qui s'alignent les uns sur les autres pour former entre deux dents du peigne P quatre colonnes.

On obtient enfin dans la troisième et dernière étape 124, comme pour la vingt-et-unième opération précédente 100, après un resserrement de l'espacement entre les dents du peigne P diminué par deux, huit couches présentant une densité de fils de chaîne en surface similaire à celle du départ, avec une largeur réduite de moitié et une épaisseur doublée.

On peut continuer de la même manière pour former la partie suivante de la section évolutive 20 du profilé. A la fin quand le rapport final de la hauteur sur la largeur est obtenu, on continue à tisser la partie aval du profilé 24 normalement, avec un nombre de couches qui reste constant et un peigne qui conserve un même écart entre ses dents.

On obtient un profilé comportant des bonnes performances mécaniques de la section évolutive dans la direction longitudinale, les fils de chaîne étant tous continus dans cette direction. De plus la préforme étant de préférence réalisée sur un étier permettant un tissage à côtés finis, les découpes ultérieures et les chutes sont réduites, les coûts de fabrication de cette préforme sont diminués.

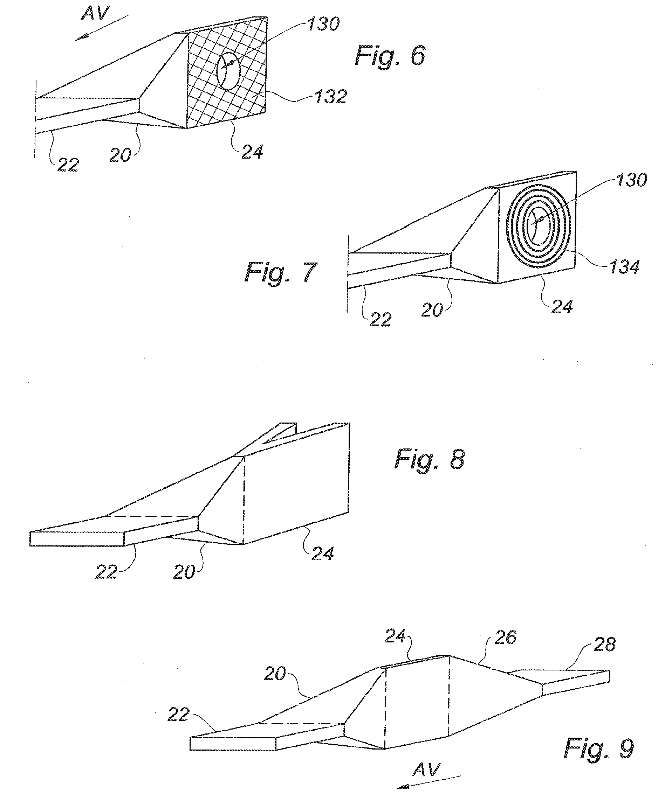

Les figures 6 et 7 présentent une application d'une préforme de ce type. La partie aval verticale 24 de la pièce finie après polymérisation de la résine, reçoit un perçage transversal 130 de fixation d'extrémité de la pièce.

La figure 6 présente en particulier un renforcement de la partie aval verticale 24 autour du perçage 130, comprenant l'ajout de chaque côté de la préforme, d'une plaque de tissu appelée aussi « patch » 132, présentant des fils orientés à +/-45° par rapport à la direction longitudinale des fils de chaîne, de manière à compléter la résistance dans les différentes directions.

La figure 7 présente un autre renforcement de la partie aval verticale 24 autour du perçage 130, comprenant l'ajout de chaque côté de la préforme, d'une plaque de fibres 134 orientées de manière concentrique autour de ce perçage.

La figure 8 présente une opération de déliage de la partie aval verticale 24, réalisant une coupe verticale dans la partie médiane de cette partie afin de former une fourche. On peut en particulier à partir de cette fourche former une chape présentant sur chaque face des renforcements d'un perçage transversal, comme présenté figure 6 et figure 7, pour réaliser notamment les extrémités du cadre arrière de grille d'inverseur de poussée présenté figure 1.

La figure 9 présente une préforme comprenant en aval de la partie plate verticale 24, une deuxième partie de section évolutive 26 symétrique de la première 20, qui réalise une diminution de la hauteur en même temps qu'une augmentation de la largeur, pour obtenir un nouveau une partie plate horizontale arrière 28 similaire à la partie avant.

## Revendications

1. Procédé de fabrication d'une préforme de fibres de renfort tissée suivant une direction longitudinale, prévue pour être imprégnée de résine afin de former un élément longiligne présentant une section transversale évolutive (20), comprenant simultanément une réduction ou inversement une augmentation de la largeur et une augmentation ou inversement une réduction de la hauteur, cette section évolutive comportant sur la longueur des fils de chaîne (C) en nombre constant qui sont continus, disposés en hauteur suivant des couches, **caractérisé en ce que** pour une réduction de la largeur il effectue un changement d'armure introduisant des fils de trame additionnels (T) qui augmentent ainsi le nombre de couches, et simultanément il resserre les dents du peigne (P) de tassement longitudinal pour réduire l'espace entre les colonne de fils de chaine (C) et inversement pour une augmentation de la largeur il réduit le nombre de fils de trame (t) qui diminue le nombre de couches et simultanément il écarte les dents du peigne (P).

2. Procédé de fabrication selon la revendication 1, **caractérisé en ce qu'**à partir d'un nombre défini de couches de fils de chaîne (C) superposées, il change le motif de tissage en insérant ainsi un nombre double de fils de trame (T), et réalise ensuite un resserrement des dents du peigne (P) pour obtenir un nombre double de couches superposées présentant une largeur réduite sensiblement de moitié.

3. Procédé de fabrication selon la revendication 2, caractérisé que chaque fils de trame (t1, t2, t3, t4) prend sur chaque couche de fils de chaîne (c1, c2) un fil sur quatre qu'il laisse de l'autre côté, les fils pris sur chaque couche (c1a, c1b, c2a, c2b) étant superposés entre les différentes couches.

4. Procédé de fabrication selon l'une quelconque des revendications précédentes, **caractérisé en ce qu'**il prend entre deux dents du peigne (P) seize fils de chaîne (C).

5. Procédé de fabrication selon l'une quelconque des revendications précédentes, **caractérisé en ce qu'**à partir d'un tissage d'une préforme plate amont (22) comprenant une largeur et une hauteur initiales, il réalise une section évolutive (20) présentant en aval (24) une largeur et une hauteur finale sensiblement égales respectivement à la hauteur et à la largeur initiale.

6. Procédé de fabrication selon l'une quelconque des revendications précédentes, **caractérisé en ce qu'**il comporte une étape suivante de dépose de fibres de renfort (132, 134) sur des faces planes d'une section plate (24) se trouvant à proximité de la section évolutive (20).

7. Procédé de fabrication selon la revendication 6, **caractérisé en ce que** les fibres de renfort prévues pour renforcer un perçage (130) de la section plate (24), présentent deux orientations croisées sensiblement à +/-45° (132) par rapport aux fils de chaîne (c), ou une orientation concentrique (134) par rapport à ce perçage.

8. Procédé de fabrication selon l'une quelconque des revendications précédentes, **caractérisé en ce qu'**il comporte pendant le tissage une opération de déliage d'une partie de section constante (24) à proximité de la section évolutive (20), réalisant une coupe médiane pour former une fourche.

9. Profilé en matériaux composites formé à partir d'une préforme recevant une résine injectée, cette préforme étant réalisée avec un procédé selon l'une quelconque des revendications précédentes, le profilé étant **caractérisé en ce qu'**il constitue un élément de structure (2) intégré dans une nacelle de turboréacteur et présentant une section transversale évolutive comprenant simultanément une réduction ou inversement une augmentation de la largeur et une augmentation ou inversement une réduction de la hauteur, cette section évolutive comportant sur la longueur des fils de chaîne (C) en nombre constant qui sont continus.

## Patentansprüche

1. Verfahren zum Herstellen eines gewebten Verstärkungsfaser-Vorformlings entlang einer Längsrichtung, dafür vorgesehen, mit Harz imprägniert zu werden, um ein längliches Element zu bilden, das einen evolutionären Querschnitt (20) aufweist, zugleich eine Verkleinerung, oder umgekehrt, eine Vergrößerung der Breite und eine Vergrößerung, oder umgekehrt eine Verkleinerung der Höhe umfassend, wobei dieser evolutionäre Querschnitt über die Länge Kettfäden (C) in konstanter Anzahl aufweist, die durchgehend sind, in der Höhe in Schichten angeordnet, **dadurch gekennzeichnet, dass** es zur Verkleinerung der Breite eine Änderung der Fachbildung durch Einführen zusätzlicher Schussfäden (T) durchführt, die so die Anzahl von Schichten erhöhen, und es gleichzeitig die Zähne des länglichen Kammes (P) zusammenschiebt, um den Raum zwischen den Säulen von Kettfäden (C) zu reduzieren, und es umgekehrt, zur Vergrößerung der Breite die Anzahl der Schussfäden (t) reduziert, die die Anzahl an Schichten verringert und es zugleich die Zähne des Kammes (P) auseinanderschiebt.

2. Verfahren zum Herstellen nach Anspruch 1, **dadurch gekennzeichnet, dass** es ausgehend von einer definierten Anzahl von Schichten an überlagerten Kettfäden (C) das Webmuster durch Einführen einer doppelten Anzahl von Schussfäden (T) ändert, und danach ein Zusammenschieben der Zähne des Kammes (P) vornimmt, um eine doppelte Anzahl von überlagerten Schichten zu erhalten, die eine im Wesentlichen um die Hälfte reduzierte Breite aufweisen.

3. Verfahren zum Herstellen nach Anspruch 2, **dadurch gekennzeichnet, dass** jeder Schussfaden (t1, t2, t3, t4) in jeder Kettfaden-Schicht (c1, c2) jeden vierten Faden aufnimmt, den er auf der anderen Seite lässt, wobei die in jeder Schicht aufgenommenen Fäden (c1a, c1b, c2a, c2b) zwischen den verschiedenen Schichten überlagert werden.

4. Verfahren zum Herstellen nach einem der vorstehenden Ansprüche, **dadurch gekennzeichnet, dass** es zwischen zwei Zähnen des Kammes (P) sechzehn Kettfäden (C) aufnimmt.

5. Verfahren zum Herstellen nach einem der vorstehenden Ansprüche, **dadurch gekennzeichnet, dass** es ausgehend von einem Weben eines stromaufwärtigen flachen Vorformlings (22), der eine anfängliche Breite und Höhe umfasst, einen evolutionären Querschnitt (20) erzeugt, der stromabwärts (24) eine endgültige Breite und Höhe aufweist, die im Wesentlichen jeweils gleich der anfänglichen Höhe und Breite sind.

6. Verfahren zum Herstellen nach einem der vorstehenden Ansprüche, **dadurch gekennzeichnet, dass** es einen folgenden Schritt zum Ablegen von Verstärkungsfasern (132, 134) auf ebenen Seiten eines flachen Querschnitts (24) aufweist, der sich in der Nähe des evolutionären Querschnitts (20) befindet.

7. Verfahren zum Herstellen nach Anspruch 6, **dadurch gekennzeichnet, dass** die Verstärkungsfasern, die zum Verstärken einer Bohrung (130) des flachen Querschnitts (24) vorgesehen sind, zwei im Wesentlichen um +/- 45° (132) im Verhältnis zu den Kettfäden (c) gekreuzte Ausrichtungen, oder eine konzentrische Ausrichtung (134) im Verhältnis zu dieser Bohrung aufweisen.

8. Verfahren zum Herstellen nach einem der vorstehenden Ansprüche, **dadurch gekennzeichnet, dass** es während des Webens einen Trennungsvorgang eines Teils mit konstantem Querschnitt (24) in der Nähe des evolutionären Querschnitts (20) durch einen Mittenschnitt zum Bilden einer Gabelung aufweist.

9. Profil aus Verbundstoffmaterialien, aus einem Vorformling gebildet, der ein eingespritztes Harz aufnimmt, wobei dieser Vorformling nach einem Verfahren nach einem der vorstehenden Ansprüche erzeugt wird, wobei das Profil **dadurch gekennzeichnet ist, dass** es ein Strukturelement (2) darstellt, das in eine Turbotriebwerksgondel integriert wird, und einen evolutionären Querschnitt aufweisend, der zugleich eine Verkleinerung, oder umgekehrt, eine Vergrößerung der Breite und eine Vergrößerung, oder umgekehrt eine Verkleinerung der Höhe umfasst, wobei dieser evolutionäre Querschnitt über die Länge Kettfäden (C) in konstanter Anzahl aufweist, die durchgehend sind.

## Claims

1. A method for manufacturing a preform of reinforcing fibers woven in a longitudinal direction, intended to be impregnated with resin in order to form a slender element having a tapered cross-section (20), simultaneously comprising a reduction or conversely an enlargement in the width and an enlargement or conversely a reduction in the height, this tapered section including, over the length, warp yarns (C) at a constant number which are continuous, vertically disposed in layers, **characterized in that** for a reduction in the width it performs a weave change introducing additional weft yarns (T) which thereby increase the number of layers, and simultaneously it tightens the teeth of the longitudinal compaction comb (P) in order to reduce the space between the warp yarns column (C), and conversely for an enlargement in the width, it reduces the number of weft yarns (t) which decreases the number of layers and simultaneously it spaces apart the teeth of the comb (P).

2. The manufacturing method according to claim 1, **characterized in that** starting from a defined number of superimposed layers of warp yarns (C), it changes the weaving pattern by thereby inserting a double number of weft yarns (T), and then performs a tightening of the teeth of the comb (P) in order to obtain a double number of superimposed layers having a width which is substantially reduced by half.

3. The manufacturing method according to claim 2, **characterized in that** each weft yarn (t1, t2, t3, t4) picks each layer of warp yarns (c1, c2) one yarn out of four that it leaves on the other side, the yarns picked on each layer (c1a, c1b, c2a, c2b) being superimposed between the different layers.

4. The manufacturing method according to any one of the preceding claims, **characterized in that** it picks sixteen warp yarns (C) between two teeth of the comb (P).

5. The manufacturing method according to any one of the preceding claims, **characterized in that** starting from a weaving of an upstream flat preform (22) comprising initial width and height, it makes a tapered section (20) having downstream (24) a width and a final height which are substantially equal respectively to the height and to the initial width.

6. The manufacturing method according to any one of the preceding claims, **characterized in that** it includes a subsequent step of depositing reinforcing fibers (132, 134) on planar faces of a flat section (24) located in the vicinity of the tapered section (20).

7. The manufacturing method according to claim 6, **characterized in that** the reinforcing fibers intended to reinforce a bore (130) of the flat section (24), have two intersecting orientations substantially at +/-45° (132) with respect to the warp yarns (c), or a concentric orientation (134) with respect to this bore.

8. The manufacturing method according to any one of the preceding claims, **characterized in that** it includes, during the weaving, an operation of loosening a constant section portion (24) in the vicinity of the tapered section (20), thereby making a median cut to form a fork.

9. A profile made of composite materials formed from a preform receiving an injected resin, this preform being made with a method according to any one of the preceding claims, the profile being **characterized in that** it constitutes a structural element (2) integrated in a turbojet engine nacelle and having a tapered cross-section simultaneously comprising a reduction or conversely an enlargement in the width and an enlargement or conversely a reduction in the height, this tapered section including, over the length, warp yarns (C) at a constant number which are continuous.
